(19) Europäisches Patentamt
European Patent Office
Office européen des brevets

(11) Publication number: **0 082 244**
**B1**

(12) **EUROPEAN PATENT SPECIFICATION**

(45) Date of publication of patent specification: **19.03.86**

(21) Application number: **82105103.4**

(22) Date of filing: **11.06.82**

(51) Int. Cl.[4]: **C 07 D 401/12**, C 08 K 5/34, C 08 F 126/02

(54) **Novel light stabilizers for polymers.**

(30) Priority: **20.07.81 US 285232**
**20.07.81 US 284881**

(43) Date of publication of application:
**29.06.83 Bulletin 83/26**

(45) Publication of the grant of the patent:
**19.03.86 Bulletin 86/12**

(84) Designated Contracting States:
**AT BE CH DE FR GB IT LI NL SE**

(56) References cited:
**FR-A-1 507 062**
**US-A-3 382 221**
**US-A-3 925 376**

(73) Proprietor: **AMERICAN CYANAMID COMPANY**
**1937 West Main Street P.O. Box 60**
**Stamford Connecticut 06904 (US)**

(72) Inventor: **Loffelman, Frank Fred**
**1255 Cornell Road**
**Bridgewater New Jersey 08807 (US)**
Inventor: **Brady, Thomas Eugene**
**8 Dorset Lane**
**Whitehouse Station New Jersey 08889 (US)**

(74) Representative: **Wächtershäuser, Günter, Dr.**
**Tal 29**
**D-8000 München 2 (DE)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 082 244 B1**

Courier Press, Leamington Spa, England.

**Description**

This invention relates to certain novel compounds and polymers thereof and to their use as light stabilizers for polymers. More particularly, this invention relates to novel compounds of the formula (I)

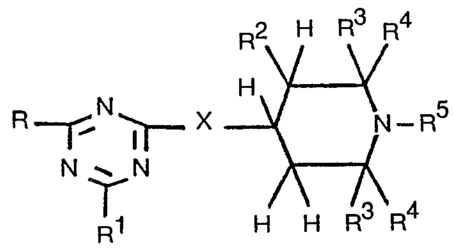

(I)

wherein R represents $C_3$—$C_6$ alkenyloxy, $C_3$—$C_6$ alkenylamino, or di($C_3$—$C_6$) alkenylamino; $R^1$ represents $C_1$—$C_8$ alkyl, $C_1$—$C_8$ alkoxy, halo, $C_1$—$C_8$ alkylthio, $C_3$—$C_6$ alkenyloxy, amino, $C_3$—$C_6$ alkenylamino, di($C_3$—$C_6$)-alkenylamino, the groups

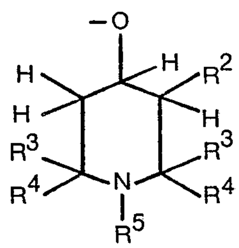

or

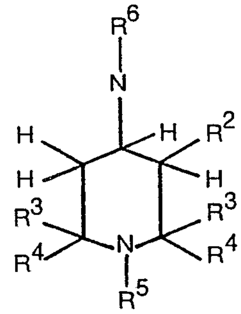

wherein $R^2$, $R^3$, $R^4$, $R^5$, and $R^6$ are as defined below, $C_1$—$C_{18}$ alkylamino, $C_1$—$C_{18}$ dialkylamino, morpholino, pyrrolidyl, piperidino, a substituted $C_1$—$C_{18}$ alkylamino, or a substituted $C_1$—$C_{18}$ dialkylamino, wherein the substituents are selected from amino, cyano, carboxy, alkoxycarbonyl wherein the alkoxy moiety has 1 to 8 carbon atoms, the groups

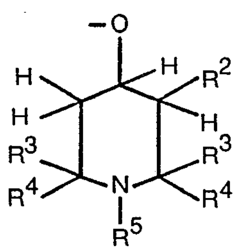

or

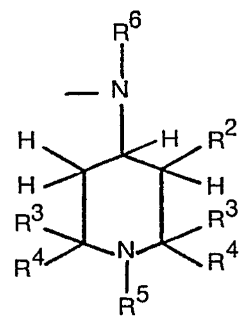

wherein $R^2$ represents hydrogen, $C_1$—$C_8$ alkyl, or benzyl; $R^3$ and $R^4$ independently represent $C_1$—$C_8$ alkyl, benzyl, or phenethyl, or together with the carbon to which they are attached form a $C_5$—$C_{10}$ cycloalkyl; and $R^5$ represents hydrogen, $C_2$—$C_3$ hydroxyalkyl, $C_1$—$C_8$ alkyl, hydroxyl, or oxyl; $R^6$ represents hydrogen, $C_1$—$C_8$ alkyl, or

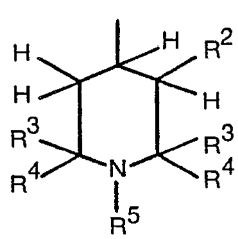

wherein $R^2$, $R^3$, $R^4$, and $R^5$ are as previously defined; X is oxy, or

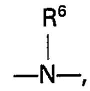

wherein $R^6$ is as previously defined.

The invention further relates to polymeric compositions obtained by the polymerization, or copolymerization of a monomer, or mixture of monomers represented by formula I, above.

The invention also relates to the use of such compounds and/or polymeric compositions for stabilizing polymers, particularly polyolefins, against degradation by ultraviolet radiation, and to the stabilized compositions.

The preferred compounds of formula (I) are those wherein $R^1$ is

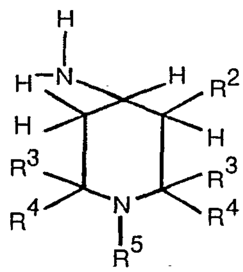

The especially preferred compound is 2-diallylamino-4,6-bis[2,2,6,6-tetramethyl-piperidinyl)amino]1,3,5-triazine.

French Patent 1,507,062 discloses a 2-(4-methyl-1-piperazinyl-4,6-bis(allyloxy)-1,3,5-triazine. U.S. 3,925,376 discloses various highly alkylated piperidinyl derivatives of 1,3,5-triazine as stabilizers for polymers while U.S. 2,712,004 discloses polymerizing allyl melamines.

It is well-known that sunlight and other sources of ultraviolet radiation cause degradation of polymers as evidenced by embrittlement or yellowing of plastic articles made therefrom. It is also well-known that this degradation can be inhibited by use of ultraviolet light stabilizers incorporated in or on such articles. Various additives, used alone or in combinations, have been suggested to inhibit such light degradation in order to prolong the useful lives of articles made from polymers. Since none has been found to be completely satisfactory, research continues in order to find compounds, or combinations of compounds, which will be more satisfactory. The present invention arose out of such research and resulted in the discovery of novel compounds and polymers which stabilize polymers against degradation by ultraviolet light.

The stabilizers of the present invention offer the following advantages:

(1) excellent light-stabilizing activity,
(2) excellent compatibility with resins,
(3) low volatility,
(4) low extractability from polymers by laundering or dry cleaning, and
(5) excellent oven-aging stability.

The compounds of formula (I) may be prepared by reacting an appropriately substituted chloro-1,3,5-triazine of formula (II)

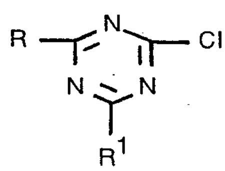

(II)

wherein R and $R^1$ are as previously defined, with a compound of formula (III), or (IV),

(III)

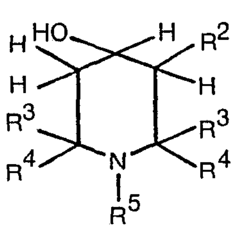

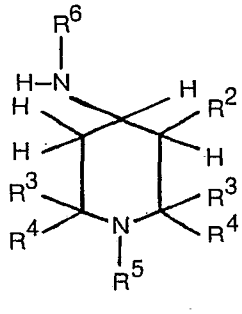

(IV)

wherein $R^2$, $R^3$, $R^4$, $R^5$, and $R^6$ are as previously defined, by methods well-known in the art.

Illustrative examples of compounds of formula (I) include the following:

2-allylamino-4-amino-6-(1-hydroxy-2,2,6,6-tetramethyl-4-piperidinyl)amino-1,3,5-triazine,
2-allylamino-4-methylamino-6-(2,2,6,6-tetramethyl-4-piperidinyl)amino-1,3,5-triazine,
2-diallylamino-4-t-octylamino-6-(2,2,6,6-tetramethyl-4-piperidinyl)amino-1,3,5-triazine,
2-allyloxy-4-t-octylamino-6-(2,2,6,6-tetramethyl-4-piperidinyl)oxy-1,3,5-triazine,
2-(3-butenyl)amino-4-methoxy-6-(1,2,2,6,6-pentamethyl-4-piperidinyl)amino-1,3,5-triazine,
2-(5-hexenyl)amino-4-n-butoxy-6-(2,6-di-n-butyl-2,6-dimethyl-4-piperidinyl)amino-1,3,5-triazine,
2-allylamino-4-t-octyl-6-(2,2,6,6-tetraethyl-4-piperidinyl)oxy-1,3,5-triazine,
2-diallylamino-4-methylthio-6-(1-oxyl-2,2,6,6-tetramethyl-4-piperidinyl)amino-1,3,5-triazine,
2-diallylamino-4,6-bis[(2,2,6,6-tetramethyl-4-piperidinyl)amino]-1,3,5-triazine,
2,4-bis(allyloxy)-6-[(1-(2-hydroxyethyl)-2,2,6,6-tetramethyl-4-piperidinyl)-amino]-1,3,5-triazine,
2-allylamino-4-diethylamino-6-(2-benzyl-2,6,6-trimethyl-4-piperidinyl)amino-1,3,5-triazine,
2,4-allylamino-6-(2-n-hexyl-2,6,6-trimethyl-4-piperidinyl)amino-1,3,5-triazine,
2-allyloxy-4-didodecylamino-6-(2,2,6,6,-tetramethyl-4-piperidinyl)amino-1,3,5-triazine,
2-allyloxy-4-diallylamino-6-(2,2,6,6-tetramethyl-4-piperidinyl)amino-1,3,5-triazine,
2-methallylamino-4-methyl-6-(2,2,6,6-tetramethyl-4-piperidinyl)amino-1,3,5-triazine,
2-allylamino-4-morpholino-6-(2,2,6,6-tetramethyl-4-piperidinyl)amino-1,3,5-triazine,
2-allyloxy-4-piperidino-6-(2,2,3,6,6-pentamethyl-4-piperidinyl)amino-1,3,5-triazine,
2-allylamino-4-(2-hydroxyethyl)amino-6-(2,2,6,6-tetramethyl-4-piperidinyl)amino-1,3,5-triazine,
2-diallylamino-4-methoxy-6-(2,2,6,6-tetramethyl-4-piperidinyl)amino-1,3,5-triazine,
2,4-bis(diallylamino)-6-(2,2,6,6-tetramethyl-4-piperidinyl)amino-1,3,5-triazine,
2-diallylamino-4-t-octylamino-6-(2,2,6,6-tetramethyl-4-piperidinyl)amino-1,3,5-triazine,
2-diallylamino-4-methoxy-6-(7-azadispiro-[5.1.5.3]hexadecan-15-yl)amino-1,3,5-triazine,
2-allylamino-4-(2-cyanoethyl)amino-6-(2,2,6,6-tetramethyl-4-piperidinyl)amino-1,3,5-triazine,
2-allyloxy-4-(3-carbethoxypropyl)amino-6-(2,2,6,6-tetramethyl-4-piperidinyl)amino-1,3,5-triazine,
2-methallyloxy-4-(6-aminohexyl)amino-6-(2,2,6,6-tetramethyl-4-piperidinyl)amino-1,3,5-triazine,
2-diallylamino-4-chloro-6-(2,2,6,6-tetramethyl-4-piperidinyl)amino-1,3,5-triazine,
2-diallylamino-4-allyloxy-6-methyl(2,2,6,6-tetramethyl-4-piperidinyl)amino-1,3,5-triazine,
2-diallylamino-4-t-octylamino-6-bis(2,2,6,6-tetramethyl-4-piperidinyl)amino-1,3,5-triazine,
2-diallylamino-4,6-tris(2,2,6,6-tetramethyl-4-piperidinyl)amino-1,3,5-triazine, and
2-diallylamino-4,6-tetrakis(2,2,6,6-tetramethyl-4-piperidinyl)amino-1,3,5-triazine.

In preparing the polymers of the present invention, a monomer of formula (I), or a mixture of a monomer of formula (I) and a comonomer, is polymerized employing an effective amount of a polymerization catalyst. Suitable polymerization catalysts include 2,2′-azobisisobutyronitrile, di-(t-butyl)-peroxide, dilauryl peroxide, lauroyl peroxide, benzoyl peroxide, acetyl peroxide, t-butyl hydrogen peroxide, ammonium persulfate, potassium persulfate. The preferred catalyst is 2,2′-azobisisobutyronitrile.

The monomer of formula (I) may be homopolymerized, or copolymerized by utilizing a copolymerizable comonomer, in emulsion or solution by conventional methods. Suitable comonomers are disclosed by Thomas in U.S. Patent 2,712,004.

The compounds and polymers of this invention are useful as light stabilizers for thermoplastic substrates such as polyolefins, polyesters, polyethers, polyurethanes, polystyrenes, high-impact polystyrenes. Preferably, the thermoplastic substrate is a polyolefin.

Other organic materials susceptible to degradation by the effects of light, the properties of which are improved by the incorporation therein of a compound of this invention, include natural and synthetic rubbers; the latter include, for example, homo-, co- and terpolymers of acrylonitrile, butadiene and styrene, and blends thereof.

The compounds of formula (I) and the polymers thereof are particularly useful in polyolefins, such as polyethylene, polypropylene, polybutylene, and copolymers thereof.

Generally, the compositions comprise a polymer containing from about 0.1% to about 5% by weight of the compound of formula (I), or polymer thereof, based on the weight of the polymeric substrate.

Preferably, the composition comprises a polyolefin containing from about 0.2% to about 2% by weight of the compound of formula (I), or polymer thereof, based on the weight of the polyolefin substrate.

Optionally, the compositions may contain other additives, especially additives useful in polyolefins, such as antioxidants, supplemental light stabilizers, plasticizers, flame retardants, antistatic and antislipping agents, fillers, dyes, pigments.

Suitable antioxidants include those of the hindered phenol type, such as 2,6-di-t-butyl-p-cresol; 4,4′bis(2,6-di-t-butylphenol); 4,4′-bis(2,6-diisopropylphenol); 2,4,6-tri-t-butylphenol; 2,2′-thiobis(4-methyl-6-t-butylphenol); octadecyl 2(3′,5′-di-t-butyl-4′hydroxyphenyl)propionate, etc; esters of thiodipropionic acid, such as dilauryl thiodipropionate and distearyl thiodipropionate, etc; hydrocarbyl phosphites, such as triphenyl phosphite, trinonyl phosphite, diisodecyl pentaerythrityl diphosphite, diphenyldecyl phosphite, etc; and combinations thereof.

Suitable supplemental light stabilizers include those of the benzotriazole class, such as 2-(2′-hydroxy-5-t-octylphenyl)benzotriazole; 2-(2′-hydroxy-3′-5′-di-t-butylphenyl)-5-chlorobenzotriazole; those of the hydroxybenzophenone type, such as 2-hydroxy-4-methoxybenzophenone; 2-hydroxy-4-octyloxy-

benzophenone; 2,2'-dihydroxy-4,4'-di-methoxybenzophenone; hindered phenol esters, such as n-hexadecyl 3,5-di-t-butyl-4-hydroxybenzoate, and 2',4'-di-t-butylphenyl 3,5-di-t-butyl-4-hydroxybenzoate; metal complexes, such as nickel complexes of 2,2'-thiobis(4-t-octylphenol); nickel butylamine complex of 2,2'-thiobis(4-t-octylphenol); nickel complexes of bis(4-t-octylphenyl)sulfone; nickel dibutyl dithiocarbamate; nickel salts of 4-hydroxy-3,5-di-t-butylbenzyl phosphonic acid monoalkyl esters where alkyl is methyl, ethyl, propyl, butyl, etc; nickel complex of 2-hydroxy-4-methylphenyl undecyl ketone oxime, etc. Further illustrative examples of suitable antioxidants and supplemental light stabilizers can be found in U.S. Patent 3,723,427 and in columns 3 and 4 of U.S. Patents 3,488,290 and 3,496,134 and in the other patents mentioned therein.

As with the compound of formula (I), and polymers thereof, the additive is advantageously employed within the range from about 0.2% to about 2% by weight, based on the weight of the untreated polymer.

The compound of formula (I) and polymers thereof may be incorporated into the polymeric substrate by any of the known techniques for compounding additives with a polymer. For example, the polymer or compound may be compounded by dry lending with the polymer substrate in powder or granular form, followed by milling, Banbury mixing, molding, casting, extruding, swelling. Alternatively, the additive may be added, as a solution or slurry in a suitable inert solvent, or dispersant, to the polymeric substrate in powder or granular form, the whole mixed intimately in a mixer, and the solvent subsequently removed. As a further possibility, the additive may be added to the polymeric substrate during the preparation of the latter, for instance at the latex stage of polymer production, to provide prestabilized polymer material.

The following examples illustrate the present invention. All parts and percentages are by weight unless otherwise indicated.

Example 1

Preparation of 2-Diallylamino-4-t-octylamino-6-(2,2,6,6-tetramethyl-4-piperidinyl)amino-1,3,5-triazine

2-Diallylamino-4-t-octylamino-6-chloro-1,3,5-triazine (33.8 grams; 0.1 mole) is slurried in water (100 mls) and 4-amino-2,2,6,6-tetramethylpiperidine (15.6 grams; 0.1 mole) is added thereto at room temperature while stirring rapidly. The resulting mixture is heated to 90—100°C and a solution of sodium carbonate (10.6 grams; 0.1 mole) is added dropwise over a period of one hour. The mixture is heated at 90—100°C for an additional half hour and cooled to ambient temperature to obtain a white gum (2.5 grams). Analysis of the product showed that it still contained 2.34% by weight of unreacted chlorine.

The crude product is dissolved in heptane (100 mls) and treated with 4-amino-2,2,6,6-tetramethylpiperidine (5 grams). To the solution is added 1.5 grams of powdered sodium hydroxide and the reaction mixture is heated at reflux for 18 hours. The hot mixture is filtered through a filter-aid and the filtrate is cooled to precipitate a white crystalline product, which is recovered by filtration and dried, mp 108—110°C.

Calculated for $C_{26}H_{47}N_7$: C, 68.27%; H, 10.28%; N, 21.44%
Found: C, 68.33%; H, 10.25%; N, 21.45%

Example 2

Preparation of 2-Diallylamino-4,6-bis[(2,2,6,6-tetramethyl-4-piperidinyl)amino]-1,3,5-triazine

2-Diallylamino-4,6-dichloro-1,3,5-triazine (49.0 grams; 0.2 mole) in dioxane (75 mls) is added to ice cold water (250 mls), while stirring rapidly, and 4-amino-2,2,6,6-tetramethylpiperidine (62.4 grams; 0.4 mole) is added in one portion to the resulting slurry. The resulting mixture is then heated to 90—100°C and a solution of sodium carbonate (42.4 grams; 0.4 mole) in water (150 mls) is added dropwise over a period of 2 hours. The mixture is heated for an additional 0.5 hour at 100°C and cooled to ambient temperature. The supernatant aqueous solution is decanted from the wax-like precipitate and the latter is washed with water and recrystallized twice from acetonitrile. The recrystallized product weighs 64 grams and melts at 124—126°C.

Calculated for $C_{27}H_{48}N_8$: C, 66.94%; H, 9.92%; N, 23.14%
Found: C, 65.19%; H, 10.03%; N, 23.11%

Example 3

Preparation of 2-Diallylamino-4-methoxy-6-(2,2,6,6-tetramethyl-4-piperidinyl)amino-1,3,5-triazine

A mixture of 2-diallylamino-4-methoxy-6-chloro-1,3,5-triazine (9.0 grams; 0.038 mole), 4-amino-2,2,6,6-tetramethylpiperidine (6.0 grams; 0.038 mole), powdered sodium hydroxide (1.5 grams; 0.038 mole), and toluene (100 mls) is refluxed for 24 hours using a trap to separate water therefrom. The reaction mixture is then filtered while hot and the filtrate is evaporated to obtain an orange-colored oil. Acetonitrile (50 mls) is added thereto and the mixture is heated to form a solution which is treated with activated carbon and filtered. The filtrate is cooled to form a precipitate which is filtered and dried to obtain 8.3 grams of product, mp 78—79°C.

Calculated for $C_{19}H_{32}N_6O$: C, 63.33%; H, 8.88%; N, 23.33%
Found: C, 63.70%; H, 8.84%; N, 23.40%

Example 4

Preparation of 2,4-bis(Diallylamino)-6-(2,2,6,6-tetramethyl-4-piperidinyl)amino-1,3,5-triazine

A mixture of 2,4-bis(diallylamino)-6-chloro-1,3,5-triazine (20.2 grams; 0.07 mole), 4-amino-2,2,6,6-tetramethylpiperidine (10.3 grams; 0.07 mole), powdered sodium hydroxide (2.8 grams; 0.07 mole), and xylene (150 mls) is refluxed for 24 hours using a water separator to remove by-product water. The reaction mixture is then filtered while hot and the filtrate is evaporated to obtain an amber oil which solidifies on standing. The solid is dissolved in hexane (150 mls) and the solution is treated with activated carbon and filtered. The filtrate is then cooled to form a precipitate which is recovered by filtration and dried to obtain 16.5 grams of product, mp 79—81°C.

Calculated for $C_{24}H_{39}N_7$: C, 67.77%; H, 9.17%; N, 23.05%
Found: C, 65.89%; H, 9.22%; N, 23.17%

Example 5

Preparation of 2-Allyloxy-4-t-octylamino-6-(2,2,6,6-tetramethyl-4-piperidinyl)amino-1,3,5-triazine

A suspension of 2-allyloxy-4-chloro-6-t-octyl-amino-1,3,5-triazine (27.68 grams; 0.093 mole), 4-amino-2,2,6,6-tetramethylpiperidine (14.5 grams 0.093 mole) and powdered sodium hydroxide (3.72 grams) 0.093 mole) is heated at reflux for 24 hours, cooled to room temperature, and diluted with water. The resulting precipitate is separated from the two-phase mixture by filtration and recrystallized from toluene to obtain 15.65 grams of a white solid which melts at 155—156°C.

Calculated for $C_{23}H_{42}N_{60}$: C, 66.1%; H, 10.1%; N, 20.1%
Found: C, 66.19%; H, 10.91%; N, 20.32%

Example 6

Preparation of 2,4-bis(allyloxy)-6-(2,2,6,6-tetramethyl-4-piperidinyl)amino-1,3,5-triazine

2,4-Dichloro-6-(2,2,6,6-tetramethyl-4-piperidinyl)amino-1,3,5-triazine hydrochloride (10.0 grams; 0.0294 mole) is added portionwise to a stirred solution of powdered sodium hydroxide (3.55 grams; 0.089 mole) in allyl alcohol (100 mls). The solution is heated at reflux for 70 hours, cooled to room temperature, and heated to distil off 50 mls of allyl alcohol. The residue is poured into ice water (200 mls) and the refluxing mixture is extracted 5 times with ether (100-ml portions). The ethereal extract is dried over anhydrous sodium sulfate, filtered, and heated to obtain 9.4 grams of crude product. The crude product is applied to a column of silica gel (Silica Gel 60; E. Merck, Darmstadt, W. Germany) and eluted with a mixture of chloroform and methanol (9.1 parts by volume). A middle cut yields 6.65 grams of product, mp 101—103°C.

Calculated for $C_{18}H_{29}N_5O_2$: C, 62.22%; H, 8.41%; N, 20.16%
Found: C, 62.26%; H, 8.36%; N, 19.17%

Examples 7—12

Testing in Polypropylene

The compounds of Examples 1—6 (0.25 gram) are separately dry blended with a mastermix of 100 grams of unstabilized polypropylene (Pro-fax® 6401) and 0.1 gram of a processing antioxidant, 2,4,6-tri-t-butylphenol. The blend is milled at 177—188°C (350—370°F) for five minutes, and then compression molded at 204°C (400°F) into a film 101.6—127 µm (4—5 mils) thick. The film and a control film, identically prepared without the compound under test, are exposed to a xenon arc in an Atlas Weather-Ometer® until they fail. A film is considered as having failed when the carbonyl content of the infrared absorption spectrum increases by 0.10-weight percent, a generally accepted point of film embrittlement.

The data in Table I show the number of hours required to increase the carbonyl content by 0.1% by weight for the compounds under test and a control film.

TABLE I

| Example | Additive | Hours to Failure |
|---|---|---|
| 7 | Product of Example 1 | 2000 |
| 8 | Product of Example 2 | 1900 |
| 9 | Product of Example 3 | 1400 |
| 10 | Product of Example 4 | 1100 |
| 11 | Product of Example 5 | — |
| 12 | Product of Example 6 | — |
| | None | < 200 |

Example 13

Polymer from 2-Diallylamino-4,6-bis[(2,2,6,6-tetramethyl-4-piperidinyl)amino-1,3,5-triazine

Dry dioxane (20 grams) is purged with nitrogen for 30 minutes and 2-diallylamino-4,6-bis(2,2,6,6-tetramethyl-4-piperidinyl)amino-1,3,5-triazine (12.0 grams) is added thereto. The temperature of the mixture is raised to 70°C while nitrogen is passed over the surface of the solution. 2,2′-Azobisisobutyronitrile (0.64 gram) is added to the reaction mixture and the temperature is maintained at 70°C, while stirring and passing nitrogen over the surface, for 21 hours and 20 minutes. At this point, 0.17 gram of additional 2,2′-azobisisobutyronitrile is added to the reaction mixture and heating is continued for an additional 3 hours and 10 minutes. At the end of this time, heating is stopped and the viscous reaction mixture is added to petroleum ether. The resulting precipitate is recovered by filtration and dried in a vacuum oven at 75°C to obtain 5.25 grams of polymer, mp 175—205°C, having a number average molecular weight of 1600.

Example 14

Polymer from 2-Diallylamino-4-t-octylamino-6-(2,2,6,6-tetramethyl-4-piperidinyl)amino-1,3,5-triazine

Dry dioxane (14 grams) is mixed with 2-diallylamino-4-t-octylamino-6-(2,2,6,6-tetramethyl-4-piperidinylamino)-1,3,5-triazine (8.0 grams) and the mixture is heated slightly to form a solution. Nitrogen is passed through the solution for 2 hours while stirring, 2,2′-Azobisisobutyronitrile (0.45 gram) is added to the solution and the temperature is increased to 70°C while stirring and passing nitrogen over the surface of the solution. The solution is stirred at 70°C for 24 hours and then 0.1 gram of 2,2′-azobisisobutyronitrile is added thereto. Heating is continued at 70°C for 17 hours and then discontinued. The viscous product is separated from the reaction mixture, dried in a vacuum oven at 80°C, ground, and stirred with petroleum ether. The petroleum ether-insoluble material is recovered by filtration and dried to obtain 3.3 grams of polymer having a number average molecular weight of 1559. The polymer softens at about 160°C and melts at about 180°C.

Example 15

Polymer from 2-Diallylamino-4-methoxy-6-(2,2,6,6-tetramethyl-4-piperidinyl)amino-1,3,5-triazine

Dry dioxane (15 grams) is purged with nitrogen for 40 minutes. To the purged dioxane are added 2-diallylamino-4-methoxy-6-(2,2,6,6-tetramethyl-4-piperidinyamino-1,3,5-triazine (11 grams) and 2,2′-azobisisobutyronitrile (0.5 gram), and the nitrogen is passed above the surface of the resulting mixture. The temperature is increased to 65°C and the mixture is stirred thereat for 24 hours. At the end of this period, 0.1 gram of 2,2′-azobisisobutyronitrile is added to the reaction mixture and the mixture is stirred at 70°C for 19 hours. At the end of this time, the reaction mixture is added to petroleum ether and the resulting precipitate is recovered and dried to obtain 5.3 grams of polymer, mp range 160°—185°C, having a number average molecular weight of 1779.

Example 16

Polymer from 2,4-bis(Diallylamino)-6-(2,2,6,6-tetramethyl-4-piperidinyl)amino-1,3,5-triazine

Dry dioxane (14 grams) is purged with nitrogen for 1.5 hours, and then 2-diallylamino-4-methoxy-6-(2,2,6,6-tetramethyl-4-piperidinylamino)-1,3,5-triazine (9.2 grams) is added thereto and dissolved by warming slightly. 2,2′-Azobisisobutyronitrile (0.45 gram) is added to the solution and the solution is purged with nitrogen for an additional 15 minutes. At this point, the nitrogen flow is directed over the surface of the reaction mixture and the temperature is raised to 63—64°C. Stirring is continued at this temperature for 25 hours, and then an additional 0.1 gram of 2,2′-azobisisobutyronitrile is added to the reaction mixture. Polymerization is continued at 63—64°C for another 24 hours and the reaction mixture is added to

petroleum ether. The resulting precipitate is recovered by filtration and dried to obtain 4.67 grams of polymer, mp range 200°—240°C, having a number average molecular weight of 768.

Example 17

Polymer from 2,4-bis(allyloxy)-6-(2,2,6,6-tetramethyl-4-piperidinyl)amino-1,3,5-triazine

A solution of 50% by weight of 2,4-diallyloxy-6-(2,2,6,6-tetramethyl-4-piperidinyl)amino-1,3,5-triazine (10.00 grams) in dioxane is heated at 75—80°C under nitrogen for eight hours and azobisisobutyronitrile (0.10 gram) is then added thereto. Heating at 75—80°C added thereto. Heating at 75—80°C is continued and 0.10 gram portions are added after 32 and 46 hours. After 72 hours, the yellow viscous mixture is triturated with hot hexane and filtered to recover a solid. The filter cake is then washed with hot hexane and air dried. The product softens at 150°C; it has a number average molecular weight of 986.

Examples 18—22

Testing in Polypropylene

The polymers of Examples 13—17 (0.25 gram) are separately dry blended with a mastermix of 100 grams of unstabilized polypropylene (Pro-fax® 6401) and 0.1 gram of a processing antioxidant, 2,4,6-tri-t-butylphenol. The blend is milled at 177—188°C (350—370°F) for five minutes, and then compression molded at 204°C (400°F) into a film 4—5 mils thick. The film and a control film, identically prepared without the compound under test, are exposed to a xenon arc in an Atlas Weather-Ometer® until they fail. A film is considered as having failed when the carbonyl content of the infrared absorption spectrum increases by 0.10-weight percent, a generally accepted point of film embrittlement.

The data in Table II show the number of hours required to increase the carbonyl content by 0.1% by weight for the compounds under test and a control film.

TABLE II

| Example | Additive | Hours to Failure |
|---|---|---|
| 18 | Product of Example 13 | 800 |
| 19 | Product of Example 14 | 800 |
| 20 | Product of Example 15 | 1400 |
| 21 | Product of Example 16 | 500 |
| 22 | Product of Example 17 | — |
| | None | < 200 |

**Claims for the Contracting States BE CH DE FR GB IT LI NL SE**

1. A compound of the formula (I)

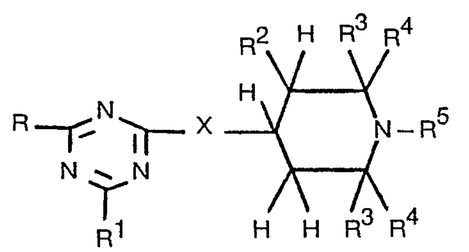

(I)

wherein R represents $C_3$—$C_6$ alkenyloxy, $C_3$—$C_6$ alkenylamino, or di($C_3$—$C_6$) alkenylamino; $R^1$ represents $C_1$—$C_8$ alkyl, $C_1$—$C_8$ alkoxy, halo, $C_1$—$C_8$ alkylthio, $C_3$—$C_6$ alkenyloxy, amino, $C_3$—$C_6$ alkenylamino, di($C_3$—$C_6$) alkenylamino, the groups

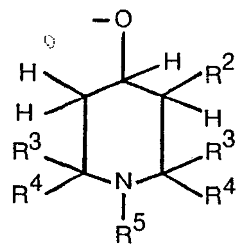

or

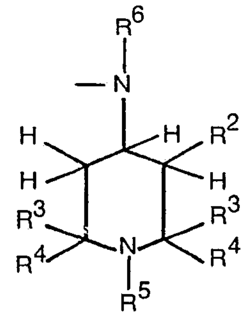

wherein $R^2$, $R^3$, $R^4$, $R^5$, and $R^6$ are as defined below, $C_1$—$C_{18}$ alkylamino, $C_1$—$C_{18}$ dialkylamino, morpholino, pyrrolidyl, piperidino, a substituted $C_1$—$C_{18}$ alkylamino, or a substituted $C_1$—$C_{18}$ dialkylamino, wherein the substituents are selected from amino, cyano, carboxy, alkoxycarbonyl wherein the alkoxy moiety has 1 to 8 carbon atoms, the groups

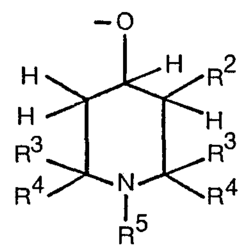

or

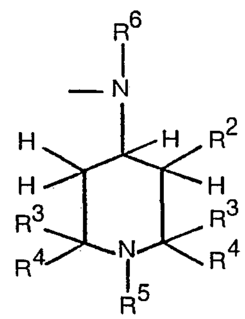

wherein $R^2$ represents hydrogen, $C_1$—$C_8$ alkyl, or benzyl; $R^3$ and $R^4$ independently represent $C_1$—$C_8$ alkyl, benzyl, or phenethyl, or together with the carbon to which they are attached form a $C_5$—$C_{10}$ cycloalkyl; and $R^5$ represents hydrogen, $C_2$—$C_3$ hydroxyalkyl, $C_1$—$C_8$ alkyl, hydroxyl, or oxyl; $R^6$ represents hydrogen, $C_1$—$C_8$ alkyl, or

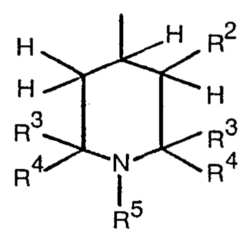

wherein $R^2$, $R^3$, $R^4$, and $R^5$ are as previously defined; X is oxy, or

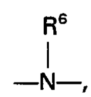

wherein $R^6$ is as previously defined.

2. The compound of Claim 1 wherein $R^1$ is

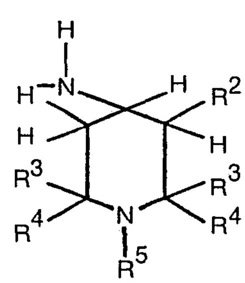

3. The compound of Claims 1 or 2 wherein $R^2$ and $R^5$ are hydrogen, and $R^3$ and $R^4$ are methyl.

4. A method of stabilizing a polymer which is normally subject to degradation by ultraviolet radiation

which comprises incorporating into said polymer from 0.1% to 5.0% by weight, based on the weight of said polymer, of a stabilizer of Claim 1.

5. The method of Claim 4 wherein the polymer is a polyolefin.

6. A polymer prepared by the polymerization of a compound according to Claim 1.

7. The polymer of Claim 6 wherein $R^1$ is

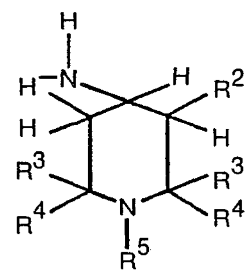

wherein $R^2$, $R^3$, $R^4$ and $R^5$ are as defined in Claim 1.

8. The polymer of Claim 6 wherein $R^1$ is

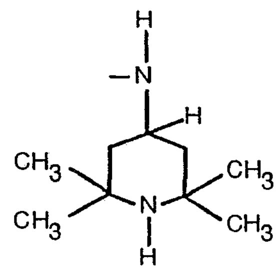

9. A method for stabilizing a polymer which is normally subject to degradation by ultraviolet radiation which comprises incorporating into said polymer from 0.1% to 5.0% by weight, based on the weight of said polymer, of a polymer of Claim 6.

10. The method of Claim 9 wherein the polymer is a polyolefin.

**Claims for the Contracting State AT**

1. A method of stabilizing a polymer which is normally subject to degradation by ultraviolet radiation which comprises incorporating into said polymer from 0.1% to 5.0% by weight, based on the weight of said polymer, of a compound of the formula (I)

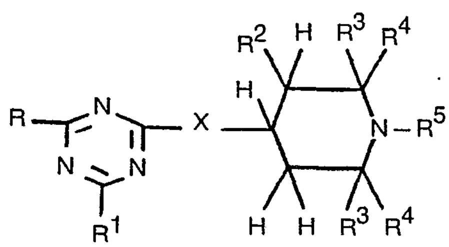

(I)

wherein R represents $C_3$—$C_6$ alkenyloxy, $C_3$—$C_6$ alkenylamino, or di($C_3$—$C_6$) alkenylamino; $R^1$ represents $C_1$—$C_8$ alkyl, $C_1$—$C_8$ alkoxy, halo, $C_1$—$C_8$ alkylthio, $C_3$—$C_6$ alkenyloxy, amino, $C_3$—$C_6$ alkenylamino, di($C_3$—$C_6$) alkenylamino, the groups

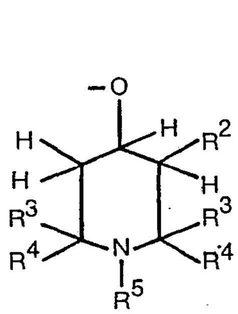

or

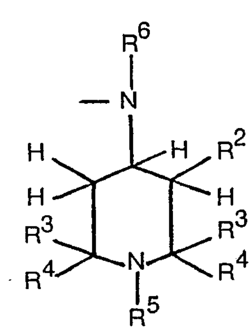

wherein $R^2$, $R^3$, $R^4$, $R^5$, and $R^6$ are as defined below, $C_1$—$C_{18}$ alkylamino, $C_1$—$C_{18}$ dialkylamino, morpholino, pyrrolidyl, piperidino, a substituted $C_1$—$C_{18}$ alkylamino, or a substituted $C_1$—$C_{18}$ dialkylamino, wherein the substituents are selected from amino, cyano, carboxy, alkoxycarbonyl wherein the alkoxy moiety has 1 to 8 carbon atoms, the groups

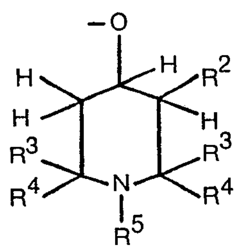

or

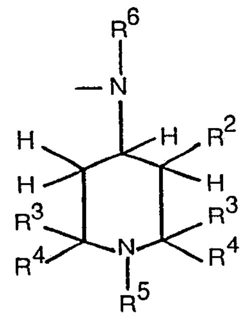

wherein $R^2$ represents hydrogen, $C_1$—$C_8$ alkyl, or benzyl; $R^3$ and $R^4$ independently represent $C_1$—$C_8$ alkyl, benzyl, or phenethyl, or together with the carbon to which they are attached form a $C_5$—$C_{10}$ cycloalkyl; and $R^5$ represents hydrogen, $C_2$—$C_3$ hydroxyalkyl, $C_1$—$C_8$ alkyl, hydroxyl, or oxyl; $R^6$ represents hydrogen, $C_1$—$C_8$ alkyl, or

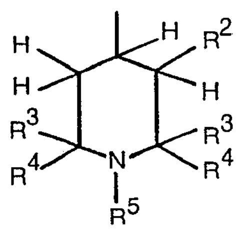

wherein $R^2$, $R^3$, $R^4$, and $R^5$ are as previously defined; X is oxy, or

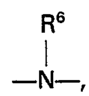

wherein $R^6$ is as previously defined.

2. The method of Claim 1 wherein $R^1$ is

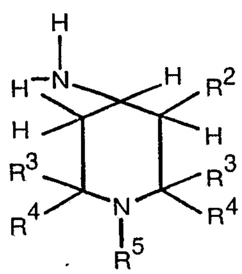

3. The method of Claims 1 or 2 wherein $R^2$ and $R^5$ are hydrogen, and $R^3$ and $R^4$ are methyl.

4. The method of Claim 3 wherein the polymer is a polyolefin.

5. A process for preparing a polymer which comprises the polymerization of a compound of the formula (I) according to claim 1.

6. The process of Claim 5 wherein $R^1$ is

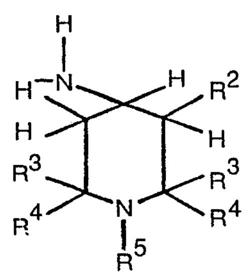

7. The process of Claim 5 wherein $R^1$ is

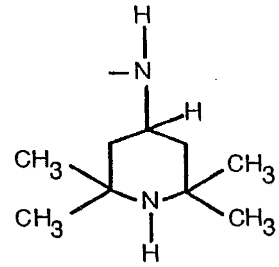

8. A method for stabilizing a polymer which is normally subject to degradation by ultraviolet radiation which comprises incorporating into said polymer from 0.1% to 5.0% by weight, based on the weight of said polymer, of a polymer prepared according to claim 5.

9. The method of Claim 8 wherein the polymer is a polyolefin.

**Patentansprüche für die Vertragsstaaten BE CH DE FR GB IT LI NL SE**

1. Verbindung der Formel (I)

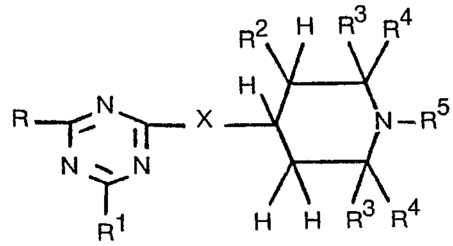

(I)

wobei R für $C_3$—$C_6$-Alkenyloxy, $C_3$—$C_6$-Alkenylamino oder Di($C_3$—$C_6$)alkenylamino steht; $R^1$ für $C_1$—$C_8$-Alkyl, $C_1$—$C_8$-Alkoxy, Halogeno, $C_1$—$C_8$-Alkylthio, $C_3$—$C_6$-Alkenyloxy, Amino, $C_3$—$C_6$-Alkenylamino, Di($C_3$—$C_6$)alkenylamino, die Gruppen

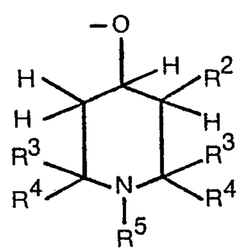

oder

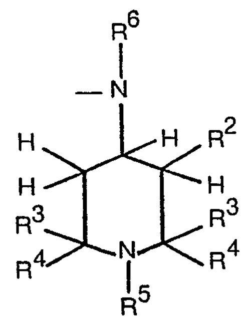

wobei $R^2$, $R^3$, $R^4$, $R^5$ und $R^6$ die untenstehende angegebene Bedeutung haben, $C_1$—$C_{18}$-Alkylamino, $C_1$—$C_{18}$-Dialkylamino, Morphilino, Pyrrolidyl, Piperidino, eine substituierte $C_1$—$C_{18}$-Alkylaminogruppe oder eine substituierte $C_1$—$C_{18}$-Dialkylaminogruppe steht, wobei die Substituenten ausgewählt sind aus, Amino-, Cyano-, Carboxy-, Alkoxycarbonylgruppen, wobei die Alkoxyeinheit 1 bis 8 Kohlenstoffatome aufweist, die Gruppen

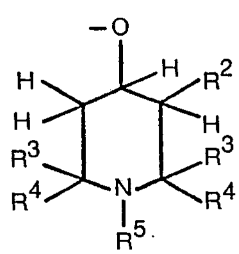

oder

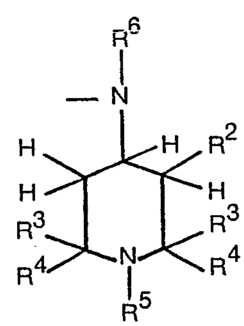

wobei $R^2$ für Wasserstoff, $C_1$—$C_8$-Alkyl oder Benzyl steht; $R^3$ und $R^4$ unabhängig für $C_1$—$C_8$-Alkyl, Benzyl oder Phenethyl stehen oder gemeinsam mit dem Kohlenstoffatom, an das sie gebunden sind, eine $C_5$—$C_{10}$-

Cycloalkylgruppe bilden; und $R^5$ für Wasserstoff, $C_2$—$C_3$-Hydroxyalkyl, $C_1$—$C_8$-Alkyl, Hydroxyl oder Oxyl steht; $R^6$ für Wasserstoff, $C_1$—$C_8$-Alkyl oder

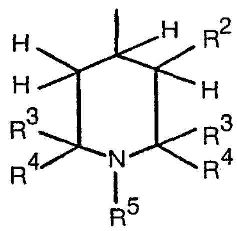

steht, wobei $R^2$, $R^3$, $R^4$ und $R^5$ die vorstehend angegebene Bedeutung haben; X für Oxy oder

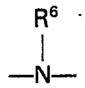

steht, wobei $R^6$ die vorstehend angegebene Bedeutung hat.

2. Verbindung nach Anspruch 1, wobei $R^1$ für

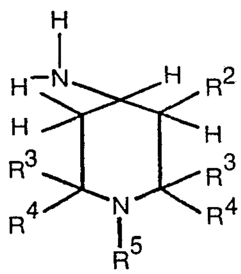

steht.

3. Verbindung nach Anspruch 1 oder 2, wobei $R^2$ und $R^5$ für Wasserstoff stehen und $R^3$ und $R^4$ Methyl bedeuten.

4. Verfahren zur Stabilisierung eines Polymeren, welches normalerweise durch ultraviolette Strahlung abgebaut wird, dadurch gekennzeichnet, daß man dem Polymeren von 0,1 bis 5,0 Gew.%, bezogen auf das Gewicht des Polymeren, eines Stabilisators gemäß Anspruch 1 einverleibt.

5. Verfahren nach Anspruch 4, wobei das Polymere ein Polyolefin ist.

6. Ein Polymeres, hergestellt durch die Polymerisation einer Verbindung gemäß Anspruch 1.

7. Das Polymere gemäß Anspruch 6, wobei $R^1$ für

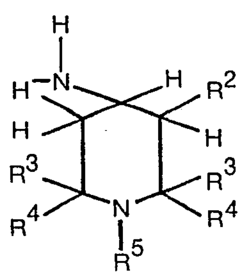

steht, wobei $R^2$, $R^3$, $R^4$ und $R^5$ die in Anspruch 1 angegebene Bedeutung haben.

8. Das Polymere gemäß Anspruch 6, wobei $R^1$ für

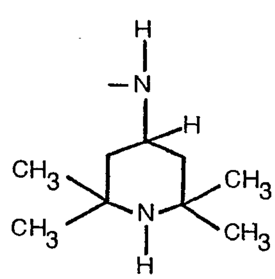

steht.

9. Verfahren zur Stabilisierung eines Polymeren, welches normalerweise durch ultraviolette Strahlung abgebaut wird, dadurch gekennzeichnet, daß man dem Polymeren von 0,1 bis 5 Gew.% bezogen auf das Gewicht des Polymeren, eines Polymeren gemäß Anspruch 6 einverleibt.

10. Verfahren gemäß Anspruch 9, wobei das Polymere ein Polyolefin ist.

**Patentansprüche für den Vertragsstaat AT**

1. Verfahren zur Stabilisierung eines Polymeren, welches normalerweise durch ultraviolette Strahlung abgebaut wird, dadurch gekennzeichnet, daß man dem Polymeren 0,1 bis 5 Gew.%, bezogen auf das Gewicht des Polymeren, einer Verbindung der Formel (I) einverleibt.

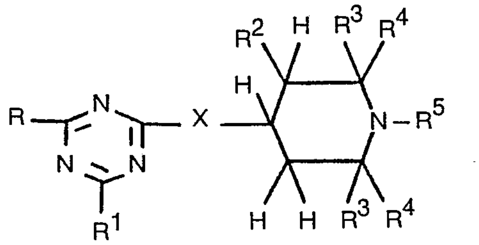

(I)

wobei R für $C_3$—$C_6$-Alkenyloxy, $C_3$—$C_6$-Alkenylamino oder Di($C_3$—$C_6$)alkenylamino steht; $R^1$ für $C_1$—$C_8$-Alkyl, $C_1$—$C_8$-Alkoxy, Halogeno, $C_1$—$C_8$-Alkylthio, $C_3$—$C_6$-Alkenyloxy, Amino, $C_3$—$C_6$-Alkenylamino Di($C_3$—$C_6$)alkenylamino, die Gruppen

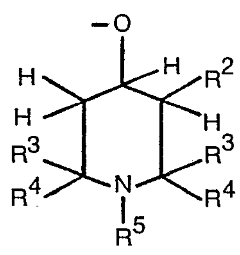

oder

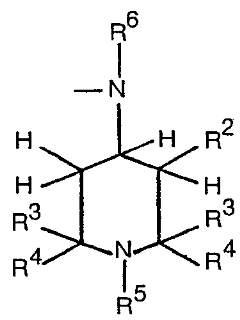

wobei $R^2$, $R^3$, $R^4$, $R^5$ und $R^6$ die untenstehende angegebene Bedeutung haben, $C_1$—$C_{18}$-Alkylamino, $C_1$—$C_{18}$-Dialkylamino, Morpholino, Pyrrolidyl, Piperidino, eine substituierte $C_1$—$C_{18}$-Alkylaminogruppe oder eine substituierte $C_1$—$C_{18}$-Dialkylaminogruppe steht, wobei die Substituenten ausgewählt sind aus, Amino-, Cyano-, Carboxy-, Alkoxycarbonylgruppen, wobei die Alkoxyeinheit 1 bis 8 Kohlenstoffatome aufweist, die Gruppen

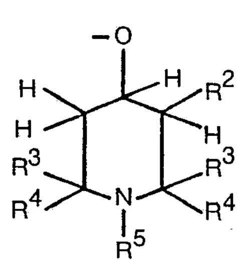

oder

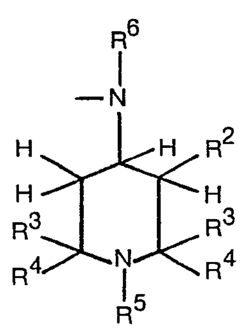

wobei $R^2$ für Wasserstoff, $C_1$—$C_8$-Alkyl oder Benzyl steht; $R^3$ und $R^4$ unabhängig für $C_1$—$C_8$-Alkyl, Benzyl oder Phenethyl stehen oder gemeinesam mit dem Kohlenstoffatom, an das sie gebunden sind, eine $C_5$—$C_{10}$-Cycloalkylgruppe bilden; und $R^5$ für Wasserstoff, $C_2$—$C_3$-Hydroxyalkyl, $C_1$—$C_8$-Alkyl, Hydroxyl oder Oxyl steht; $R^6$ für Wasserstoff, $C_1$—$C_8$-Alkyl oder

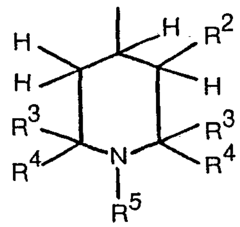

steht, wobei $R^2$, $R^3$, $R^4$ und $R^5$ die vorstehend angegebene Bedeutung haben; X für Oxy oder

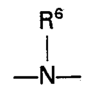

steht, wobei $R^6$ die vorstehend angegebene Bedeutung hat.

2. Verfahren nach Anspruch 1, wobei $R^1$ für

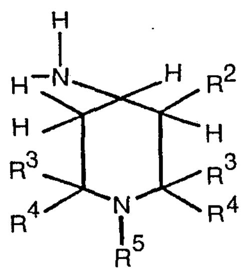

steht.

3. Verfahren nach Anspruch 1 oder 2, wobei $R^2$ und $R^5$ für Wasserstoff stehen und $R^2$ und $R^3$ Methyl bedeuten.

4. Verfahren nach Anspruch 3, wobei das Polymere ein Polyolefin ist.

5. Verfahren zur Herstellung eines Polymeren, umfassend die Polymerisation einer Verbindung der Formel (I) gemäß Anspruch 1.

6. Verfahren nach Anspruch 5, wobei $R^1$ für

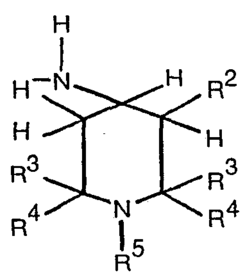

steht.

7. Verfahren nach Anspruch 5, wobei $R^1$ für

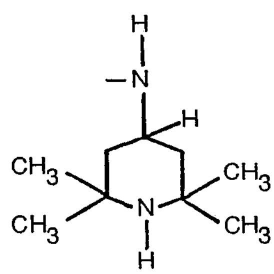

steht.

8. Verfahren zur Stabilisierung eines Polymeren, welches normalerweise durch ultraviolette Strahlung abgebaut wird, dadurch gekennzeichnet, daß man dem Polymeren von 0,1 bis 5 Gew.%, bezogen auf das Gewicht des Polymeren, eines gemäß Anspruch 5 hergestellten Polymeren einverleibt.

9. Verfahren nach Anspruch 8, wobei das Polymere ein Polyolefin ist.

**Revendications pour les Etats contractants BE CH DE FR GB IT LI NL SE**

1. Un composé de formule (I)

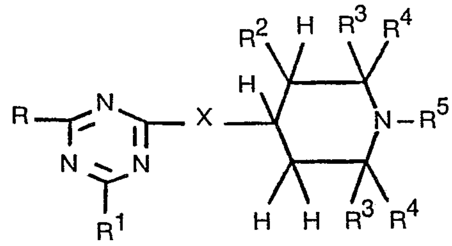

(I)

dans laquelle R représente un groupe alcényloxy en $C_3$—$C_6$, alcénylamino en $C_3$—$C_6$, ou di(alcényle en $C_3$—$C_6$)amino; $R^1$ représente un groupe alkyle en $C_1$—$C_8$, alcoxy en $C_1$—$C_8$, halogéno, alkylthio en $C_1$—$C_8$, alcényloxy en $C_3$—$C_6$, amino, alcénylamino en $C_3$—$C_6$, di(alcényl en $C_3$—$C_6$) amino, les groupes

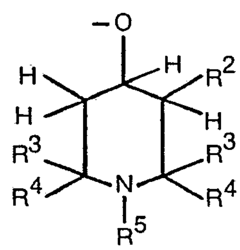

ou

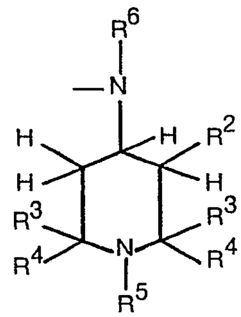

où $R^2$, $R^3$, $R^4$, $R^5$ et $R^6$ sont comme définis ci-après, un groupe alkylamino en $C_1$—$C_{18}$, dialkylamino en $C_1$—$C_{18}$, morpholino, pyrrolidyle, pipéridino, alkylamino en $C_1$—$C_{18}$ substitué ou dialkylamino en $C_1$—$C_{18}$ substitué, où les substituants sont choisis parmi des groupes amino, cyano, carboxy, alcoxycarbonyle où le motif alcoxy a de 1 à 8 atomes de carbone, les groupes

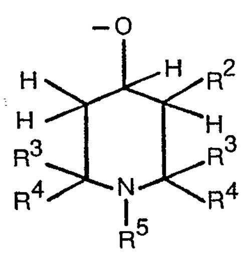

ou

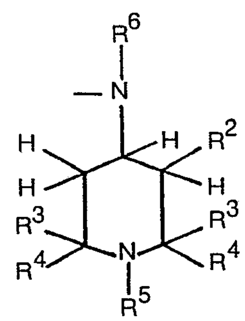

où $R^2$ représente l'hydrogène, un groupe alkyle en $C_1$—$C_8$, un benzyle; $R^3$ et $R^4$ représentent indépendamment un groupe alkyle en $C_1$—$C_8$, benzyle ou phénéthyle ou bien avec l'atome de carbone auquel ils sont fixés, ils forment un groupe cycloalkyle en $C_5$—$C_{10}$; et $R^5$ représente de l'hydrogène, un groupe hydroxyalkyle en $C_2$—$C_3$, alkyle en $C_1$—$C_8$, hydroxy, ou oxy; $R^6$ représente l'hydrogène, un groupe alkyle en $C_1$—$C_8$, ou

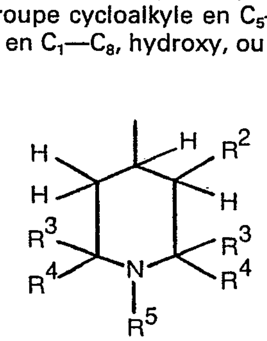

où $R^2$, $R^3$, $R^4$ et $R^5$ sont comme précédemment définis; X est oxy, ou

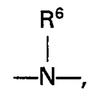

où $R^6$ est tel que précédemment défini.

2. Composé selon la revendication 1 dans lequel $R^1$ est

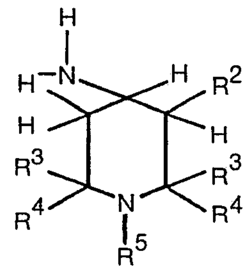

3. Composé selon la revendication 1 ou 2, dans lequel $R^2$ et $R^5$ sont de l'hydrogène, et $R^3$ et $R^4$ représentent le groupe méthyle.

4. Procédé de stabilisation d'un polymère qui est normalement sensible à une dégradation par le rayonnement ultraviolet, qui comprend l'incorporation dans ledit polymère de 0,1% à 5,0% en poids, sur la base du poids dudit polymère, d'un stabilisant selon la revendication 1.

5. Procédé selon la revendication 4, dans lequel le polymère est une polyoléfine.

6. Polymère préparé par la polymérisation d'un composé selon la revendication 1.

7. Polymère selon la revendication 6 dans lequel $R^1$ est

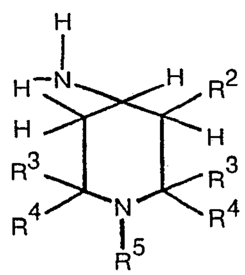

où $R^2$, $R^3$, $R^4$ et $R^5$ sont tels que définis dans la revendication 1.

8. Polymère selon la revendication 6 dans lequel $R^1$ est

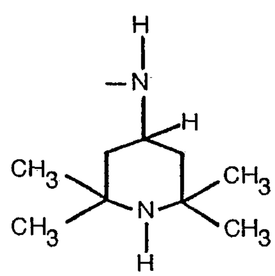

9. Procédé de stabilisation d'un polymère qui est normalement sensible à une dégradation par le rayonnement ultraviolet, qui comprend l'incorporation dans ledit polymère de 0,1% à 5,0% en poids, sur la base du poids dudit polymère, d'un polymère selon la revendication 6.

10. Procédé selon la revendication 9, dans lequel le polymère est une polyoléfine.

**Revendications pour l'Etat contractant AT**

1. Procédé de stabilisation d'un polymère qui est normalement sensible à une dégradation par le rayonnement ultraviolet, qui comprend l'incorporation dans ledit polymère de 0,1 à 5,0% en poids, sur la base du poids dudit polymère, d'un composé de formule (I);

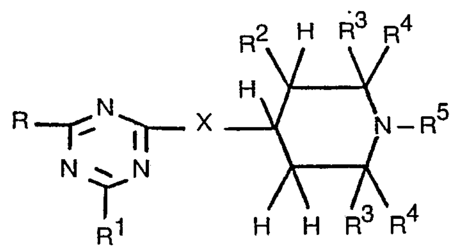

(I)

dans laquelle R représente un groupe alcényloxy en $C_3$—$C_6$, alcénylamino en $C_3$—$C_6$, ou di(alcényle en $C_3$—$C_6$)amino; $R^1$ représente un groupe alkyle en $C_1$—$C_8$, alcoxy en $C_1$—$C_8$, halogéno, alkylthio en $C_1$—$C_8$, alcényloxy en $C_3$—$C_6$, amino, alcénylamino en $C_3$—$C_6$, di(alcényl en $C_3$—$C_6$) amino, les groupes

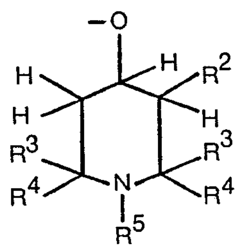

or

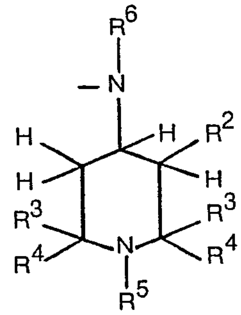

où $R^2$, $R^3$, $R^4$, $R^5$ et $R^6$ sont comme définis ci-après, un groupe alkylamino en $C_1$—$C_{18}$, dialkylamino en $C_1$—$C_{18}$, morpholino, pyrrolidyle, pipéridino, alkylamino en $C_1$—$C_{18}$ substitué ou dialkylamino en $C_1$—$C_{18}$ substitué, où les substituants sont choisis parmi des groupes amino, cyano, carboxy, alcoxycarbonyle où le motif alcoxy a de 1 à 8 atomes de carbone, les groupes

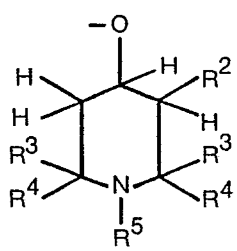

or

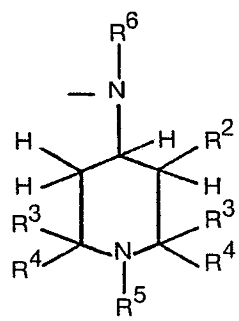

où $R^2$ représente l'hydrogène, un groupe alkyle en $C_1$—$C_8$, un benzyle; $R^3$ et $R^4$ représentent indépendamment un groupe alkyle en $C_1$—$C_8$, benzyle ou phénéthyle ou bien avec l'atome de carbone auquel ils sont fixés, ils forment un groupe cycloalkyle en $C_5$—$C_{10}$; et $R^5$ représente de l'hydrogène, un groupe hydroxyalkyle en $C_2$—$C_3$, alkyle en $C_1$—$C_8$, hydroxy, ou oxy; $R^6$ représente l'hydrogène, un groupe alkyle en $C_1$—$C_8$, ou

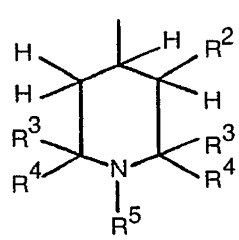

où $R^2$, $R^3$, $R^4$ et $R^5$ sont comme précédemment définis; X est oxy, ou

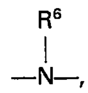

où $R^6$ est tel que précédemment défini.

2. Procédé selon la revendication 1, dans lequel $R^1$ est

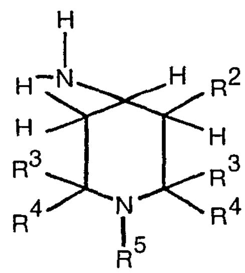

3. Procédé selon la revendication 1 ou 2, dans lequel $R^2$ et $R^5$ sont de l'hydrogène, et $R^3$ et $R^4$ représentent le groupe méthyle.

4. Procédé selon la revendication 3, dans lequel le polymère est une polyoléfine.

5. Procédé de préparation d'un polymère qui comprend la polymérisation d'un composé de formule (I) suivant la revendication 1.

6. Procédé selon la revendication 5, dans lequel $R^1$ est

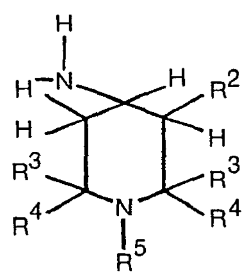

7. Procédé selon la revendication 5, dans lequel $R^1$ est

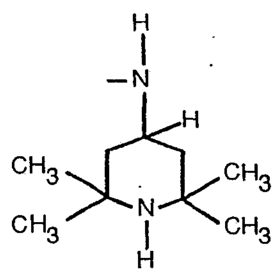

8. Procédé de stabilisation d'un polymère qui est normalement sensible à une dégradation par le rayonnement ultraviolet, qui comprend l'incorporation dans ledit polymère de 0,1% à 5,0% en poids, sur la base du poids dudit polymère, d'un polymère préparé selon la revendication 5.

9. Procédé selon la revendication 8, dans lequel le polymère est une polyoléfine.